# EUROPÄISCHE PATENTSCHRIFT

(11) **EP 2 215 703 B1**
(45) Veröffentlichungstag und Bekanntmachung des Hinweises auf die Patenterteilung: **05.12.2012**
(21) Anmeldenummer: 08804576.0
(22) Anmeldetag: 23.09.2008
(51) Int. Cl.: H02K 5/14, H02K 11/02

(54) **GLEICHSTROMMASCHINE**
DC MACHINE
MACHINE À COURANT CONTINU

(30) Priorität: 22.11.2007 DE 102007056323
(43) Veröffentlichungstag der Anmeldung: 11.08.2010
(73) Patentinhaber: Robert Bosch GmbH, 70442 Stuttgart (DE)
(72) Erfinder: SHIN, Jae Yong, Songgang-dong Yuseong-gut Daejeon-shi 305-756 (KR); KOPF, Frank, 77833 Ottersweier (DE); SCHEIB, Oliver, 76889 Schweigen-Rechtenbach (DE); LIEDEL, Markus, 91257 Pegnitz (DE); KUPFERER, Michael, 77866 Rheinau Freistett (DE); STRUPP, Michael, 76448 Durmersheim (DE)
(86) Internationale Anmeldenummer: PCT/EP2008/062651
(87) Internationale Veröffentlichungsnummer: WO 2009/065642

(56) Entgegenhaltungen:
- EP-A- 0 712 195
- DE-A1- 2 037 993
- DE-A1-102004 041 488
- DE-A1-102005 000 120
- DE-U1-202006 007 619
- FR-A- 2 539 930
- JP-A- 58 144 552
- US-A- 3 026 432
- US-A- 3 177 388
- US-A- 3 760 209
- US-A- 4 845 396
- US-A- 5 086 244
- US-A- 5 237 231

## Beschreibung

### Stand der Technik

Die Erfindung geht aus von einer Gleichstrommaschine, insbesondere einem Gleichstrommotor für den Einsatz in einem Kraftfahrzeug, nach der Gattung des unabhängigen Anspruchs. Derartige bürstenkommutierte Gleichstrommaschinen mit einem KunststoffBürstenträger sind grundsätzlich bekannt, beispielsweise aus der DE 38 18 891 C2. Diese Druckschrift zeigt eine Gleichstrommaschine mit einem scheibenförmigen, dort als Basis bezeichneten Bürstenträger, welcher insgesamt aus Kunststoff besteht und in einer vorgegebenen Position zum Kommutator der Maschine fest mit deren Polgehäuse verbunden ist. Zur Positionierung von Komponenten auf dem Bürstenträger der Maschine macht die Druckschrift nur Ausführungen hinsichtlich des Anschlusses der Bürsten, welche mit den Anschlussleitungen der Maschine in einem Kontaktstück elektrisch verbunden und befestigt werden. Auch die US 3,026,432 A offenbart eine Gleichstrommaschine mit entsprechendem Bürstenträger.

Aus der DE 20 37 993 A1 ist ein Gleichstrommotor mit einem Stator, einem drehbar in einem einseitig von einem Lagerdeckel geschlossenen Polgehäuse gelagerten Rotor mit einem Kommutator und mit einem im Wesentlichen aus Kunststoff gefertigten Bürstenträger bekannt, wobei der Bürstenträger zwischen dem Polghäuse und dem Lagerdeckel verklemmt wird.

Aus der US 5,086,244 A und der EP 0 712 195 A sind ferner Gleichstrommotoren bekannt, deren Bürstenträger jeweils über einen Befestigungsflansch, welcher sich über den gesamten Umfang der Bürstenträger erstreckt, zur Arretierung zwischen einem Polgehäuse und einem Lagerdeckel der Gleichstrommotoren fest eingeklemmt sind.

### Offenbarung der Erfindung

Die erfindungsgemäße Gestaltung hat gegenüber dem Stand der Technik den Vorteil, dass die durch die Fertigung und die Bestückung des Bürstenträgers bedingte Toleranzkette einer Gleichstrommaschine weiter verringert wird. Zur weitgehend spannungsfreien Befestigung des Bürstenträgers am Polgehäuse ist es vorteilhaft, wenn dieser an seinem Umfang einen kreisringförmig ausgebildeten Befestigungsflansch aufweist, der punktuell durch symmetrisch angeordnete Stege mit einer Grundplatte des Bürstenträgers verbunden ist. Der Befestigungsflansch wird zwischen dem Polgehäuse und dem benachbarten Lagerdeckel eingespannt und der Bürstenträger hierdurch vom Metallgehäuse der Maschine weitgehend entkoppelt, wodurch sich einerseits unterschiedliche Wärmedehnungen am Polgehäuse und am Bürstenträger individuell ausbilden können, ohne dass sich der Kunststoffbürstenträger verformt. Andererseits erhält man durch diese Gestaltung zusätzlich eine Geräuschentkoppelung zwischen dem Bürstenträger und dem Gehäuse, da Schwingungen am Bürstenträger nur in geringem Umfang auf das Gehäuse übertragen werden. Hierbei wird insbesondere erreicht, dass der Bürstenträger der Maschine eine ausreichende Stabilität in sich sowie definierte Befestigungs- und Positionierungsmöglichkeiten für die auf ihm anzuordnenden Komponenten besitzt und gleichzeitig so gestaltet ist, dass die Fertigung ohne Schwierigkeiten automatisierbar ist.

Eine besonders hohe Stabilität des Bürstenträgers erreicht man dadurch, dass seine Grundplatte durch gewölbeartige Strukturen versteift ist, wodurch mehrere untereinander verbundene Ebenen entstehen, welche die Biegefestigkeit und die Verwindungsteifigkeit des Bürstenträgers und damit die Positionierungsgenauigkeit der auf ihm angeordneten Komponenten deutlich erhöht.

Bei der Verwendung von metallischen Bürstenköchern ist es zur Erzielung einer besonders hohen Festigkeit und Schüttelstabilität zweckmäßig, wenn an den Bestückungsaussparungen auf der Unterseite der Grundplatte des Bürstenträgers im Bereich des Durchtritts verstemmbarer Köcherfüßchen Überbiegerippen für diese angeordnet sind. Hierdurch wird ein besonders fester Sitz der Bürstenköcher beim Verstemmen der Köcherfüßchen gewährleistet.

Weitere Einzelheiten und Ausgestaltungen der Erfindung ergeben sich aus den Patentansprüchen und der Beschreibung der Ausführungsbeispiele der Erfindung.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine Schnittdarstellung der erfindungsgemäß gestalteten Gleichstrommaschine,
- Figur 2: eine perspektivische Teilansicht des Bürstenträgers im Bereich des Anschlusses der auf ihm befestigten Entstörkomponenten,
- Figur 3: eine perspektivische Gesamtansicht des unbestückten Bürstenträgers,
- Figur 4: eine perspektivische Teilansicht des Bürstenträgers im Bereich der Bürstenköcher,
- Figur 5: eine Draufsicht auf einen mit Bürsten und Entstörkomponenten bestückten Bürstenträger und
- Figur 6: eine perspektivische Teilansicht des Bürstenträgers mit einer Bürstenandrückfeder.

### Ausführungsformen der Erfindung

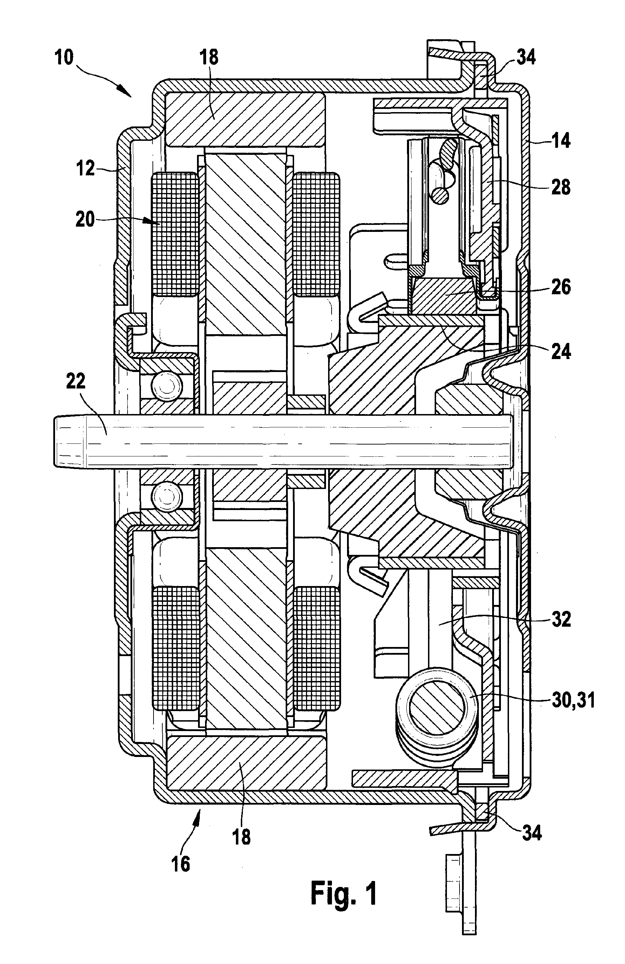

In Figur 1 ist mit 10 eine Gleichstrommaschine bezeichnet in der Ausführung als Gleichstrommotor für den Einsatz in einem Kraftfahrzeug. Die Maschine besitzt ein topfförmiges Polgehäuse 12, welches durch einen Lagerdeckel 14 einseitig geschlossen ist. Innerhalb des Polgehäuses 12 wird ein Stator 16 durch Permanentmagnete 18 ausgebildet, welche am Polgehäuse 12 in bekannter Weise befestigt sind. Ein Rotor 20 der Maschine sitzt auf einer Welle 22, welche einerseits im Polgehäuse 12 und andererseits im Lagerdeckel 14 drehbar gelagert ist. Auf der Rotorwelle 22 ist weiterhin ein Kommutator 24 angeordnet, welchem über Bürsten 26 der Erregerstrom für den Rotor 20 zugeführt wird.

Die Bürsten 26 und weitere Komponenten, insbesondere die erforderlichen Entstörmittel der Maschine, sind auf einem Bürstenträger 28 gehalten. Von den Entstörmitteln des Motors sind in Figur 1 eine Entstördrossel 30 und ein Kondensator 32 zu erkennen. Die Arretierung des Bürstenträgers 28 im Polgehäuse 12 erfolgt durch einen Befestigungsflansch 34, welcher sich über den gesamten Umfang des Bürstenträgers erstreckt und zwischen dem Polgehäuse 12 und dem Lagerdeckel 14 im fertig montierten Zustand der Maschine eingeklemmt ist. Im Einzelnen wird der Aufbau und die Bestückung des Bürstenträgers 28 an Hand der folgenden Figuren erläutert, in denen für gleiche Teile gleiche Bezugszeichen verwendet sind.

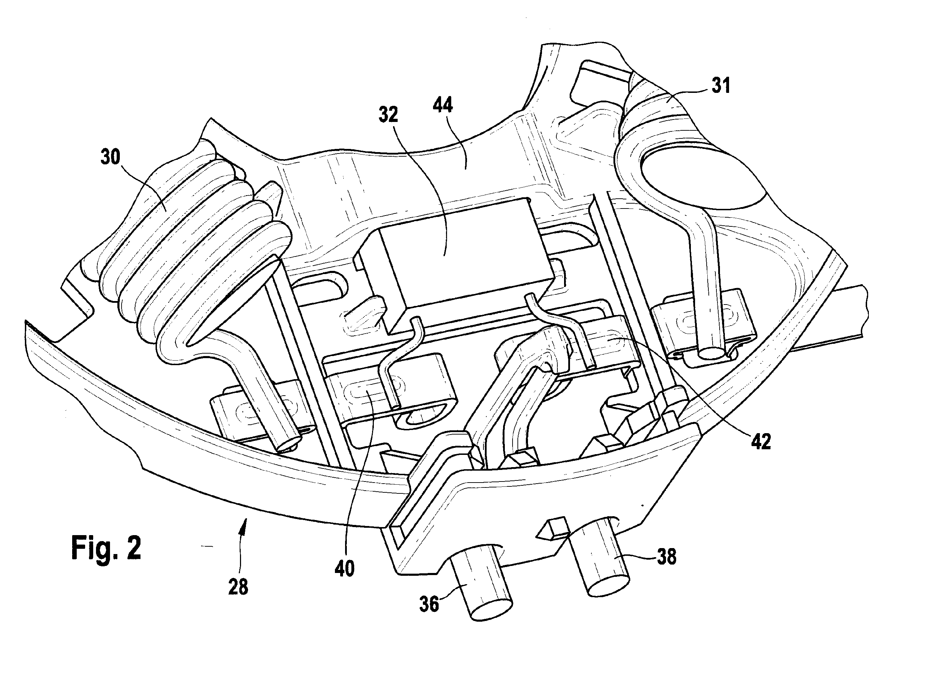

Figur 2 zeigt eine perspektivische Darstellung eines Teils des aus Kunststoff gespritzten Bürstenträgers 28. Die Stromzufuhr von einer nicht dargestellten Gleichspannungsquelle erfolgt über zwei Anschlussleitungen 36 und 38, welche einerseits mit dem positiven und andererseits mit dem negativen Pol der nicht dargestellten Gleichspannungsquelle sowie über Kontaktstücke 40 und 42 einerseits mit den Entstördrosseln 30 und 31 verbunden sind. Gleichzeitig liegt die Anschlussleitung 36 an einer Elektrode und die Anschlussleitung 38 an der anderen Elektrode des Entstörkondensators 32. Dieser ist in einer senkrecht zur Maschinenachse ausgerichteten, als Tasche 44 ausgebildeten Halterung dauerhaft und schüttelsicher arretiert. Die Tasche 44 ist hierbei einteilig mit dem Bürstenträger 28 aus Kunststoff gespritzt. Anstelle einer taschenförmigen Gestaltung kann die Halterung jedoch auch in Form von Haltearmen oder in Form eines Haltebügels ausgeführt sein, wobei es wesentlich ist, dass die Ausrichtung der Halterung jeweils senkrecht zur Maschinenachse verläuft, um eine dauerhaft schüttelsichere Arretierung des Kondensators 32 zu gewährleisten.

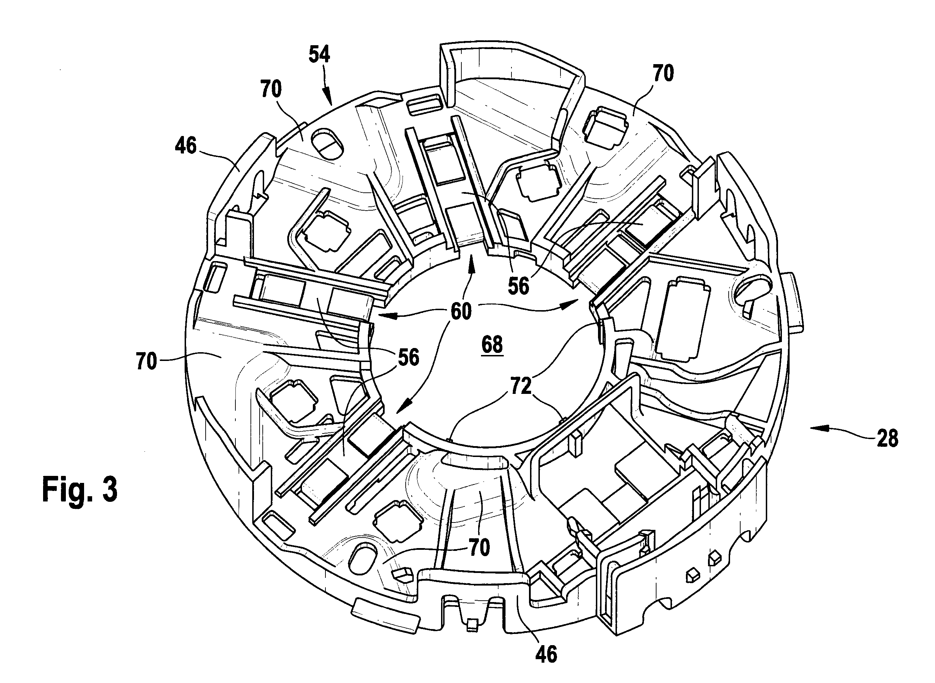

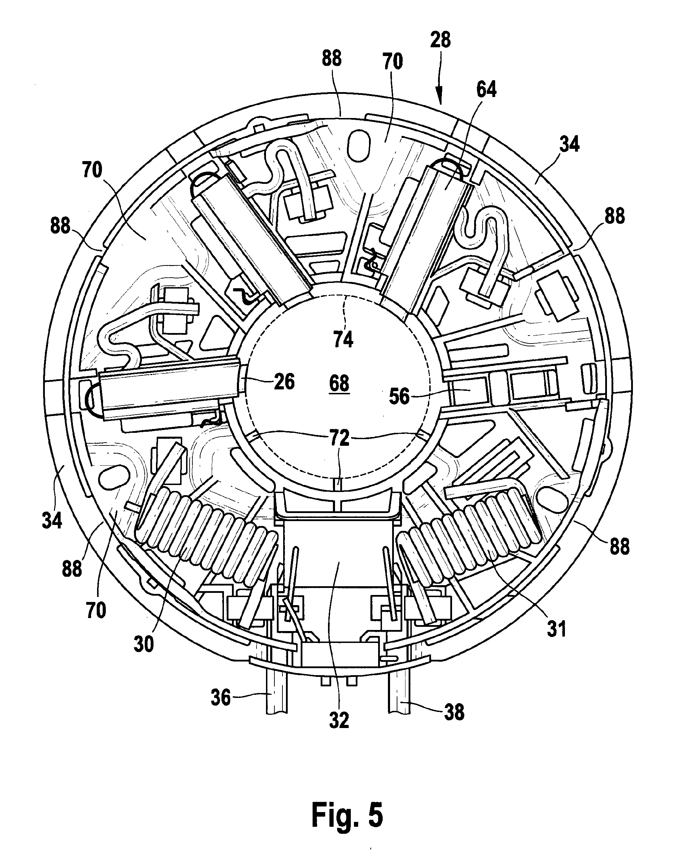

Figur 3 zeigt eine perspektivische Ansicht des unbestückten Bürstenträgers 28. Neben den bereits erörterten Ausgestaltungen weist dessen Grundplatte 54 eine Mehrzahl von Bestückungsaussparungen 56 für die Montage einer variablen Anzahl von in dieser Figur nicht dargestellten Bürstenköcher auf. Der Bürstenträger 28 gemäß Figur 5 besitzt vier Bestückungsaussparungen 56 von denen je nach Gestaltung der Gleichstrommaschine wahlweise zwei, drei oder vier in bekannter Weise mit Bürstenträgern 28 bestückt werden können.

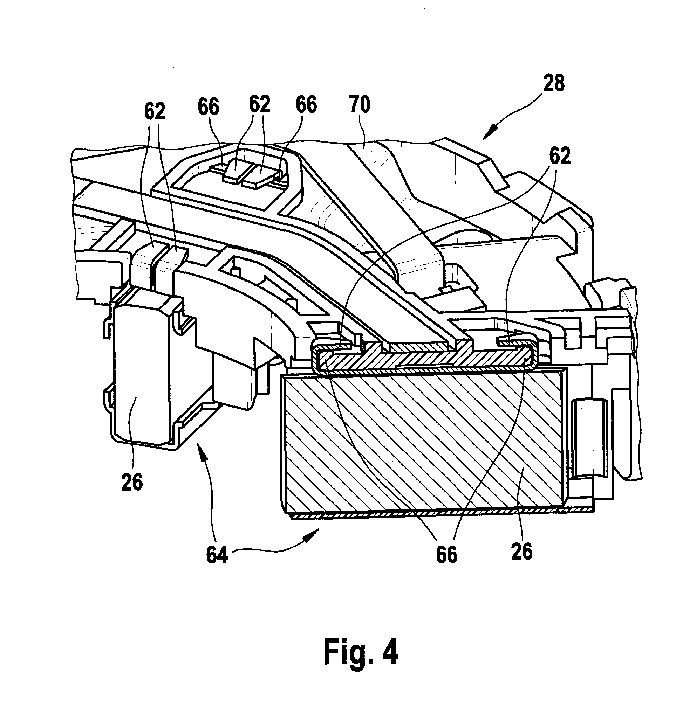

Die in Figur 3 nicht gezeigten, in der Regel metallischen Bürstenköcher werden mittels Köcherfüßchen gesichert, welche einerseits durch Aussparungen 58 in der Grundplatte 54 des Bürstenträgers hindurch und um das innere Ende 60 der Bestückungsaussparungen 56 herum greifen und unterhalb der Grundplatte 54 verstemmt werden, wie dies aus Figur 4 ersichtlich ist. Hierbei sind an der in Figur 4 sichtbaren Unterseite der Grundplatte 54 des Bürstenträgers 28 im Bereich des Durchtritts der Köcherfüßchen 62 der Bürstenköcher 64 Überbiegerippen 66 an der Grundplatte 54 ausgebildet, welche beim Verstemmen der Köcherfüßchen 62 einen dauerhaften und spielfreien Sitz der Bürstenträger 28 gewährleisten. Die zentrale Öffnung für den späteren Durchtritt des Kommutators 24 durch den Bürstenträger 28 ist mit 68 bezeichnet. Weiterhin sind in den Figuren 3 und 4 gewölbeartige Strukturen 70 an der Grundplatte 54 des Bürstenträgers 28 zu erkennen, welche die Steifigkeit der Grundplatte deutlich erhöhen. Die Grundplatte 54 kann so in mehreren Ebenen gestaltet und versteift werden.

Figur 5 zeigt eine Draufsicht auf einen mit Bürsten 26 und Entstörkomponenten 30, 31 und 32 bestückten Bürstenträger 28, aus welcher die Verteilung der Bestückungskomponenten auf dem Bürstenträger ersichtlich ist. Die Darstellung zeigt, dass die Bestückungsaussparungen 56 für die Bürstenträger 28 so auf der Grundplatte 54 angeordnet sind, dass die Bürsten in einem ersten, sich etwa über die obere Hälfte der Grundplatte erstreckenden Sektor und die elektrischen Entstörmittel 30, 31, 32 in einem zweiten Sektor auf der unteren Hälfte der Grundplatte 54 liegen. Durch diese Anordnung erreicht man, dass die entstörten elektrischen Verbindungen zu den Drosseln 30 und 31 und zu dem Kondensator 32 außerhalb des von den Bürsten 26 eingenommenen oberen Sektors des Bürstenträgers 28 verlaufen und so in die bereits entstörten elektrischen Verbindungen von den Bürsten keine Störsignale mehr induziert werden, wodurch die elektromagnetische Verträglichkeit (EMV) der Maschine deutlich verbessert wird.

Im unteren Bereich der zentralen Öffnung 68 im Bürstenträger 28 sind drei Zentrierrippen 72 zu erkennen, welche etwa gleich weit in die zentrale Öffnung 68 des Bürstenträgers 28 hineinragen wie die Bürsten 26 selbst bei ihrer kontaktierenden Auflage auf dem in Figur 5 nicht dargestellten Kommutator 24. Diese Gestaltung ist durch eine gestrichelte Kreislinie 74 angedeutet. Auf diese Weise wird die Zentrierung eines in seiner Gestaltung im Wesentlichen der gestrichelten Linie 74 entsprechenden Bestückungshilfsmittels zum Einbringen des Kommutators 24 in die zentrale Öffnung 68 im Bürstenträger 28 deutlich erleichtert. Aus Symmetriegründen sind dabei die Zentrierrippen 72 gleichmäßig über den nicht von den Bürsten 26 besetzten unteren Sektor des Bürstenträgers 28 verteilt.

Weiterhin ist in Figur 5 noch die Gestaltung des Befestigungsflansches 34 für den Bürstenträger 28 dargestellt, welcher sich über den gesamten Umfang des Bürstenträgers 28 erstreckt, mit diesem jedoch nur punktuell über mehrere, am Umfang verteilte Stege 88 verbunden ist. Der Befestigungsflansch 34 und die Stege 88 sind einteilig mit dem Bürstenträger 28 aus Kunststoff gespritzt. Zur Arretierung des Bürstenträgers 28 ist der Flansch 34 zwischen dem Rand des Polgehäuses 12 und dem gegenüberliegenden Rand des Lagerdeckels 14 fest eingeklemmt, wodurch eine sichere Halterung und exakte axiale Positionierung des Bürstenträgers 28 gewährleistet sind. Gleichzeitig wird jedoch durch die punktuelle Verbindung des Bürstenträgers 28 mit dem Befestigungsflansch 34 der Bürstenträgerkörper weitgehend vom Polgehäuse 12 entkoppelt, so dass sich unterschiedliche Wärmedehnungen des Bürstenträgers 28 und des Polgehäuses 12 individuell ausbilden können, ohne dass sich die Grundplatte 54 des Bürstenträgers 28 verwölbt. Zusätzlich entsteht eine Geräuschentkoppelung zwischen dem Bürstenträger 28 und dem Polgehäuse 12 mit einer deutlichen Verminderung der von der Maschine abgestrahlten Geräusche.

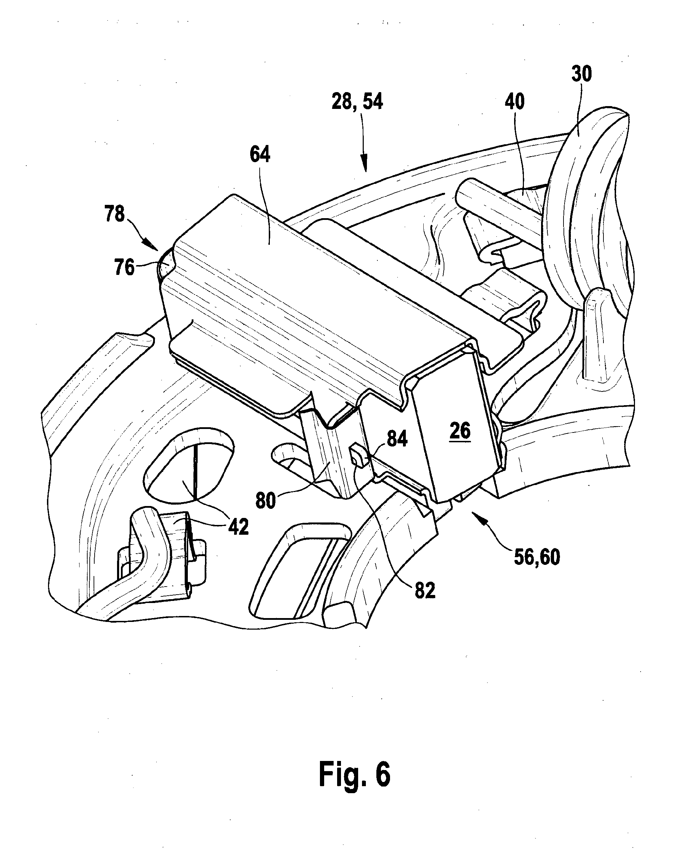

Figur 6 zeigt eine perspektivische Teilansicht des Bürstenträgers 28 im Bereich einer Bürste 26, aus der die Anordnung einer als Rollfeder ausgebildeten Feder 76 zum Anpressen der Bürste 26 an den Kommutator 24 ersichtlich ist. Die Feder ragt mit ihrem gerollten Ende 78 in den Bürstenköcher 64 hinein und drückt die Bürste 26 in Richtung des Kommutators, mit ihrem dem Kommutator 24 zugewandten Z-förmigen Endabschnitt umgreift sie den Bürstenköcher 64 und wird an ihm rastend arretiert. Zusätzlich weist der Z-förmige Endabschnitt 80 der Feder 76 noch eine Öffnung 82 auf für den Durchtritt eines Positionierpins 84 am Bürstenköcher 64, wodurch die Feder 76 punktgenau und schüttelsicher am Bürstenköcher 64 gehalten und positioniert ist.

## Patentansprüche

1. Gleichstrommaschine, insbesondere Gleichstrommotor für den Einsatz in einem Kraftfahrzeug, mit einem Stator (16), einem drehbar in einem einseitig von einem Lagerdeckel (14) geschlossenen Polgehäuse (12) gelagerten Rotor (20) mit einem Kommutator (24), und mit einem im Wesentlichen aus Kunststoff gefertigten Bürstenträger (28) mit einer Grunfplatte (54) zur Halterung von wenigstens zwei Bürsten (26) und weiteren Komponenten, wobei der Bürstenträger (28) Mittel aufweist zur Verbesserung der Positionierung der Komponenten relativ zur restlichen Maschine und/oder zur Verkürzung der Toleranzkette der Maschine, und wobei die Mittel einen Befestigungsflansch (34) umtassen, welcher sich über den gesamten Umfang des Bürstenträgers (28) erstreckt, und der Befestigungsflansch (34) zur Arretierung des Bürstenträgers (28) zwischen dem Polgehäuse (12) und dem Lagerdeckel (14) fest eingeklemmt ist, **dadurch gekennzeichnet, dass** der Befestigungsflansch (34) kreisringförmig ausgebildet und punktuell durch symmetrisch angeordnete Stege (88) mit der Grundplatte (54) des Bürstenträgers (28) verbunden ist.

2. Gleichstrommaschine nach Anspruch 1, **dadurch gekennzeichnet, dass** die Grundplatte (54) des Bürstenträgers (28) durch gewölbeartige Strukturen (70) versteift ist.

3. Gleichstrommaschine nach Anspruch 1, **dadurch gekennzeichnet, dass** auf der Unterseite des Bürstenträgers (28) im Bereich von Bestückungsaussparungen (56) für verstemmbare Köcherfüßchen (62) von metallischen Bürstenköchem (64) Überbiegerippen (66) für die Köcherfüßchen (62) angeordnet sind.

## Claims

1. DC machine, in particular DC motor for use in a motor vehicle, having a stator (16), a rotor (20) which is rotatably mounted in a pole housing (12) that is closed on one side by a bearing cover (14) and which has a commutator (24), and having a brush support (28), which is produced substantially from plastic and has a base plate (54), for holding at least two brushes (26) and further components, with the brush support (28) having means for improving the positioning of the components relative to the rest of the machine and/or for shortening the tolerance chain of the machine, and with the means comprising a fastening flange (34) which extends over the entire circumference of the brush support (28), and the fastening flange (34) being firmly clamped in for the purpose of locking the brush support (28) between the pole housing (12) and the bearing cover (14), **characterized in that** the fastening flange (34) is in the form of a ring and is connected to the base plate (54) of the brush support (28) at points by symmetrically arranged webs (88).

2. DC machine according to Claim 1, **characterized in that** the base plate (54) of the brush support (28) is reinforced by arch-like structures (70).

3. DC machine according to Claim 1, **characterized in that** bend-over ribs (66) for the cartridge feet (62) are arranged on the lower face of the brush support (28) in the region of fitting cutouts (56) for cartridge feet (62), which can be caulked, of metal brush cartridges (64).

## Revendications

1. Machine à courant continu, en particulier moteur à courant continu destiné à être utilisé dans un véhicule automobile, comprenant un stator (16), un rotor (20) monté de manière rotative dans un boîtier de pôles (12) fermé d'un côté par un couvercle de palier (14) avec un collecteur (24) et un support de balais (28) fabriqué sensiblement en plastique avec une plaque de base (54) pour la fixation d'au moins deux balais (26) et de composants supplémentaires, le support de balais (28) présentant des moyens pour améliorer le positionnement des composants par rapport au reste de la machine et/ou pour raccourcir la chaîne de tolérances de la machine, et les moyens comprenant une bride de fixation (34) qui s'étend sur toute la périphérie du support de balais (28), et la bride de fixation (34) étant serrée fixement pour le blocage du support de balais (28) entre le boîtier de pôles (12) et le couvercle de palier (14), **caractérisée en ce que** la bride de fixation (34) est réalisée sous forme de bague circulaire et est connectée ponctuellement par des nervures (88) disposées symétriquement à la plaque de base (54) du support de balais (28).

2. Machine à courant continu selon la revendication 1, **caractérisée en ce que** la plaque de base (54) du support de balais (28) est renforcée par des structures (70) de type cintrées.

3. Machine à courant continu selon la revendication 1, **caractérisée en ce que** des nervures de surflexion (66) pour des pattes de fourreau (62) sont disposées du côté inférieur du support de balais (28) dans la région d'évidements de montage (56) pour des pattes de fourreau rabattables (62) de fourreaux de balais métalliques (64).
